# FASCICULE DE BREVET EUROPEEN

(11) **EP 2 697 029 B1**
(45) Date de publication et mention de la délivrance du brevet: **04.03.2015**
(21) Numéro de dépôt: 12712675.3
(22) Date de dépôt: 10.04.2012
(51) Int. Cl.: B29C 45/00, B60K 15/03

(54) **PROCÉDÉ DE FABRICATION DE RÉSERVOIRS À PROPRIÉTÉS BARRIÈRES ÉLEVÉES AUX FLUIDES**
VERFAHREN ZUR HERSTELLUNG VON TANKS MIT HOHEN FLÜSSIGKEITSBARRIEREEIGENSCHAFTEN
METHOD FOR THE PRODUCTION OF TANKS HAVING HIGH FLUID-BARRIER PROPERTIES

(30) Priorité: 11.04.2011 FR 1153118
(43) Date de publication de la demande: 19.02.2014
(73) Titulaire: Rhodia Operations, 93306 Aubervilliers (FR)
(72) Inventeur: BZDUCHA, Wojciech, F-92400 Courbevoie (FR); SPERONI, Franco, I-20020 Ceriano Laghetto (MI) (IT); LAPIERRE, Christophe, F-69330 Jonage (FR)
(74) Mandataire: Benvenuti, Federica
(86) Numéro de dépôt international: PCT/EP2012/056446
(87) Numéro de publication internationale: WO 2012/140010

(56) Documents cités:
- WO-A1-2004/104102
- WO-A1-2008/135401
- US-A1- 2009 203 845
- US-A1- 2011 000 127
- DIJKSTRA D. J.: "Guidelines for rheological charcterization of polyamide melts", PURE APPL. CHEM., vol. 81, no. 2, 2009, pages 339-349, XP002664879,

## Description

La présente invention concerne un procédé de fabrication d'un réservoir à propriétés barrières élevées aux fluides dans lequel une composition polyamide spécifique comprenant des agents modifiants la résistance aux chocs est utilisé pour la fabrication de composants par moulage par injection dans une première étape et ensuite un assemblage de ces composants pour obtenir ledit réservoir. La composition polyamide présente une viscosité et une perméabilité à l'essence adéquate et suffisant permettant la fabrication de réservoirs ayant un excellent compromis entre les propriétés barrières aux fluides et les propriétés mécaniques.

### ART ANTERIEUR

Les polyamides techniques sont utilisés pour la réalisation de nombreux articles dans différents domaines, comme le domaine de l'automobile, où des propriétés spécifiques de rigidité, de résistance aux chocs, de stabilité dimensionnelle, en particulier à températures relativement élevées, d'aspect de surface, de densité et de poids sont particulièrement recherchées. Le choix d'un matériau pour une application donnée est généralement guidé par le niveau de performances exigées vis-à-vis de certaines propriétés et par son coût. On cherche en effet toujours de nouveaux matériaux susceptibles de répondre à un cahier des charges en terme de performance et/ou de coûts.

Il est connu de l'art antérieur d'utiliser des matériaux polyamide pour la fabrication par extrusion soufflage d'articles mono- ou multicouches destinés à contenir ou à transporter un fluide tel que par exemple des tubes, conduites ou réservoirs.

Toutefois, il est souvent nécessaire de procéder à des améliorations de ces matériaux pour leur conférer des propriétés barrières aux gaz ou aux liquides satisfaisantes.

Il est par exemple connu d'utiliser des tubes ou réservoirs multicouches, notamment de deux à six couches ; chaque couche pouvant être constituée de matériaux différents pour conférer à l'ensemble les propriétés barrières et mécaniques requises selon les applications. Toutefois, de tels articles multicouches sont coûteux à produire et des problèmes de délaminations peuvent survenir entre les matériaux incompatibles des différentes couches.

Il est aussi connu d'utiliser pour la diminution de la perméabilité des matrices plastiques, notamment des matrices polyamides ou polyoléfines avec des nanocharges lamellaires. Une telle diminution de perméabilité est attribuée à un effet de « tortuosité » provoquée par ces nanocharges. Les nanocharges lamellaires les plus explorées aujourd'hui sont des argiles de type smectites, principalement la montmorillonite. Toutefois, il est difficile de mettre en oeuvre ces produits dans la mesure où il est nécessaire de les exfolier dans la matrice notamment en utilisant des agents d'intercalations pour obtenir des lamelles individuelles de haut facteur de forme.

Une autre voie utilisée pour diminuer la perméation des matrices plastiques est le traitement de surface par des couches fines de matériaux à très faible perméabilité. Ces procédés de déposition peuvent avoir lieu par déposition chimique, telle que la fluorination de réservoirs en HDPE, la déposition sous vide d'aluminium, ou la déposition plasma, ou bien par voie physique, comme par exemple par déposition humide, telle que la déposition d'émulsions de PVdC sur films pour emballage, ou sur de flacons soufflés.

Le procédé d'extrusion soufflage est par ailleurs contraignant notamment pour la réalisation d'articles ayant des géométries et structures complexes et comprenant des inserts.

Ainsi, jusqu'à maintenant, il a été proposé dans l'art antérieur des solutions complexes, difficiles à mettre en oeuvre et coûteuses pour augmenter les propriétés barrières des matériaux plastiques ; qui plus est souvent au regard des autres propriétés des matériaux plastiques tel que notamment les propriétés mécaniques et de processabilité. Il est ainsi souhaitable de mettre au point des articles à propriétés barrières élevées aux fluides qui permettent d'obtenir des niveaux d'imperméabilité efficaces, tout en évitant les inconvénients mentionnés précédemment, notamment sans utiliser le procédé de soufflage par extrusion.

Le document US2011/000127 A1 décrit un procédé de fabrication d'un réservoir à base de polyamide.

### INVENTION

La demanderesse vient de mette en évidence qu'il était parfaitement possible de réaliser des réservoirs présentant des propriétés barrières élevées aux fluides par moulage par injection en utilisant une composition polyamide spécifique et performante, comprenant des agents modificateurs du choc, pour la réalisation de composants de ces réservoirs. Il apparait ainsi que ces formulations polyamides présentent des propriétés rhéologiques suffisantes et de bonne propriétés mécaniques tout en ayant de bonnes propriétés barrières aux fluides, notamment les carburants. Ces réservoirs obtenus ainsi par moulage par injection sont faciles à obtenir avec des temps de cycle courts en évitant les contraintes du procédé de soufflage par extrusion.

La présente invention concerne ainsi un procédé de fabrication d'un réservoir à propriétés barrières élevées aux fluides, comprenant au moins les étapes suivantes :
a) fabrication d'un ou plusieurs composants par moulage par injection d'une composition polyamide ; et
b) assemblage du ou des composants obtenus à l'étape a), éventuellement avec un ou plusieurs autres composants, pour obtenir le réservoir ;
   ladite composition polyamide comprenant de 5 à 40 % en poids d'agent modificateur de la résistance aux chocs et présentant les caractéristiques suivantes :
   - une viscosité à l'état fondu comprise entre 50 et 700 Pa.s, mesurée selon la norme ISO11443 à un gradient de cisaillement de 1000s⁻¹ et température égale à la température de fusion du polyamide + 35°C ; et
   - une perméabilité à l'essence SP95 E10 inférieure ou égale à 10 g.mm/m².jour, mesurée à une température de 40°C et une humidité relative de 20 %,
   ladite composition comprenant :
   - au moins 20 % en poids par rapport au poids total d'agent modificateur de la résistance au choc, d'un agent modificateur de la résistance au choc comprenant des groupements fonctionnels réactifs avec le polyamide, et/ou
   - au moins 10 % en poids par rapport au poids total d'agent modificateur de la résistance au choc, d'un agent compatibilisant comprenant des groupements fonctionnels réactifs avec le polyamide, et
   ladite composition polyamide étant dépourvue de cyclodextrine et de silice et comprenant une résine novolaque.

Tout particulièrement, la composition est dépourvue de charges liantes, encore appelées « binding fillers ».

Tout particulièrement, le procédé peut conduire à un réservoir dont la paroi présente un impact Charpy entaillé à -40°C (KJ/m²)- ISO 179-1/1eA supérieur ou égal à 23 kJ/m², notamment supérieur ou égal à 25 kJ/m², voire supérieur ou égal à 27 kJ/m². En particulier ces résultats sont obtenus sans charges de renfort.

On entend selon l'invention par « réservoir », un article destiné à recevoir, stocker et/ou délivrer un fluide, notamment du carburant d'un véhicule automobile ou d'un aérodyne.

On entend par « matériaux ou articles à propriétés barrières élevées aux fluides », un objet qui présente une perméabilité réduite vis-à-vis d'un fluide. Selon la présente invention, le fluide peut être un gaz ou un liquide. Comme gaz, on peut citer notamment l'oxygène, le dioxyde de carbone, l'hydrogène, l'hélium, l'azote, les hydrocarbures légers, tels que le méthane, l'éthane, le propane, l'éthylène et le propylène, et la vapeur d'eau. Comme liquides, on peut citer les solvants apolaires, notamment les solvants représentatifs des essences tels que le toluène, l'isooctane et/ou les solvants polaires tels que l'eau et les alcools comme le méthanol ou l'éthanol, les réfrigérants comme l'éthylène glycol et les mélanges de solvants apolaires, de solvants polaires et de solvants apolaires/polaires, comme par exemple les essences alcoolisées tel que les essences de type E10 et E85. Il est à noter que les liquides peuvent présenter des viscosités variables, tels que notamment les liquides de hautes viscosité s'apparentant aux gels ou crèmes.

La composition selon l'invention peut présenter une viscosité à l'état fondu comprise entre 100 et 500 Pa.s, à une température T = Tf + 35°C. Pour mesurer cette viscosité la température de fusion du polyamide peut être déterminée par calorimétrie différentielle à balayage - DSC « Differential Scanning Calorimetry » à l'aide d'un appareil Perkin Elmer Pyris 1 à une vitesse de 10°C/min. La Tf est ainsi calculée par l'appareil par rapport à la température correspondante au sommet du pic de fusion.

En particulier, la composition présente une viscosité à l'état fondu supérieure ou égale à 150 Pa.s, tout particulièrement allant de 200 et 500 Pa.s., voire de 250 et 450 Pa.s.

Le procédé selon l'invention peut permettre de préparer par injection des réservoirs de grande capacité, notamment d'au moins 10 litres et en particulier de 10 à 25 litres. Tout particulièrement, ceux-ci peuvent présenter une épaisseur, notamment une épaisseur moyenne, de paroi faible, en particulier inférieure à 4 mm, tout particulièrement allant de 1 à 3 mm, voire allant de 1 à 2 mm, et encore plus particulièrement d'environ 1,5 mm.

Tout particulièrement, le procédé peut conduite à des réservoirs dont les parois répondent au test Essai choc tel que défini par la Directive 2000 8 CE, pour une épaisseur de 3 mm, voire de 1,5 mm, en particulier avec un Impact Charpy entaillé à -40°C (KJ/m²) - ISO 179-1/1eA supérieur ou égal à 30 kJ/m².

Le procédé selon l'invention peut encore permettre d'obtenir des réservoirs, en particulier des réservoirs ayant des formes complexes, ayant une épaisseur de paroi très précise, notamment de moins de 3 mm, notamment d'environ 2 mm, voire d'environ 1,5 mm. En particulier au moins 95 %, notamment au moins 98 %, voire au moins 99 %, et tout particulièrement 100 % de la surface des parois externes, et éventuellement internes, du réservoir présentent une épaisseur inférieure ou égale à 4 mm, en particulier inférieure ou égale à 3 mm, tout particulièrement inférieure ou égale à 2 mm, voire d'environ 1,5 mm.

Le procédé selon l'invention peut encore permettre, de manière simple et commode, d'insérer différents composants dans le réservoir, tels que les principaux composants du système de carburant, par exemple des sections structurelles, des chicanes de ballottement supplémentaires, permettant une réduction du bruit et/ou une amélioration de l'intégrité structurelle du réservoir.

La composition selon l'invention présente préférentiellement une perméabilité à l'essence SP95 E10 inférieure ou égale à 7 g.mm/m².jour, plus préférentiellement inférieure ou égale à 4 g.mm/m².jour.

Cette perméabilité est particulièrement mesurée selon le protocole suivant : des plaques de dimension 100x100x0,8 mm sont obtenues par moulage par injection d'une composition polyamide sur une machine DEMAG 80 t de diamètre de vis 25 mm ; par exemple, pour du PA66: Tbarrel=275°C, Tmoule=80°C, temps de cycle 25 s. Les plaques sont séchées à 80°C sous vide pendant une nuit. Une des faces de la plaque est ensuite placée en contact avec de l'essence SP95 E10, comprenant 10% en volume d'éthanol, 45% d'iso-octane et 45% de toluène, à l'aide d'une coupelle de perméation en aluminium de volume 25 cm³ remplie d'essence à 75%, l'ensemble coupelle-plaque étant scellé de façon étanche. Les coupelles sont ensuite placées dans une étuve à 40°C avec une humidité relative de 20 %. La masse de l'ensemble (coupelle+plaque+essence) est mesurée au cours du temps. Pendant une première période dite période d'induction, on ne détecte aucune perte de masse et cela permet de vérifier l'étanchéité du système. La perte de masse détectée est multipliée par l'épaisseur de la plaque de polymère qui est de 0,8 mm dans la configuration de test choisie et divisée par la surface d'échange polymère / essence définie par le design de la coupelle de perméation. Un disque de surface 0,001256 m² dans la configuration de test choisie. En dérivant par rapport au temps cette perte de masse normalisée on obtient une valeur de perméabilité instantanée, exprimée en g.mm/m².J. La perméabilité instantanée est nulle pendant la période d'induction, puis elle augmente progressivement jusqu'à une valeur à l'équilibre qui correspond à la valeur de perméabilité en régime permanent. Cette valeur de perméabilité en régime permanent est considérée comme étant la perméabilité du matériau. Les valeurs de perméabilité données plus loin sont des valeurs moyennes obtenues à partir de trois essais au minimum.

Le polyamide de l'invention est notamment choisi dans le groupe comprenant les polyamides obtenus par polycondensation d'au moins un diacide carboxylique aliphatique avec une diamine aliphatique ou cyclique ou cycloaliphatique ou arylaliphatique comme le PA 6.6, PA 6.10, PA 6.12, PA 10.10, PA 10.6, PA 12.12, PA 4.6, MXD 6, PA 9.2 ou entre au moins un diacide carboxylique aromatique et une diamine aliphatique ou aromatique comme les polytéréphtalamides, polyisophtalamides, ou leur mélange et (co)polyamides tels que les PA6.6/6.T, PA9/T, PA6.6/4.T, PA10/T, PA6.T/6.1, PA6.6/6.I etc. Le polyamide de l'invention peut aussi être choisi dans les polyamides obtenus par polycondensation d'au moins un aminoacide ou lactame sur lui-même, l'amino-acide pouvant être généré par l'ouverture hydrolytique d'un cycle lactame tels que, par exemple PA 6, PA 7, PA 11, PA 12, PA 13 ou leur mélanges et (co)polyamides. Comme type de copolyamide on peut notamment citer le polyamide 6/66.

On préfère notamment les polyamides semi-cristallins aliphatiques ou semi-aromatiques.

On préfère particulièrement les polyamides de type 6 et les polyamide de type 66. On entend notamment par polyamide de type 6 un polyamide comprenant au moins 90 % en poids de résidus de monomères caprolactame ou aminocaproïque. On entend notamment par polyamide de type 66 un polyamide comprenant au moins 90 % en poids de résidus de monomères acide adipique et hexaméthylènediam ine.

On peut notamment utiliser des polyamides de poids moléculaires variables par addition avant ou pendant la polymérisation des monomères de polyamide, ou encore en voie fondue à l'extrusion, de monomères modifiant la longueur des chaînes, tel que notamment des composés difonctionnels et/ou monofonctionnels présentent des fonctions amines ou acides carboxyliques, ou anhydride ou epoxy capables de réagir avec les monomères du polyamide ou le polyamide.

Par acide carboxylique, on entend les acides carboxyliques et leurs dérivés, tels que les anhydrides d'acide, les chlorures d'acide et les esters, par exemple. Par amine, on entend les amines et leurs dérivés capables de former une liaison amide.

On peut utiliser au début, en cours ou en fin de polymérisation tout type d'acides mono- ou di-carboxylique, aliphatiques ou aromatiques ou tout types d'amines mono- ou di-amines, aliphatiques ou aromatiques.

On peut utiliser tout particulièrement un polyamide obtenu au moins à partir d'acide adipique et d'hexaméthylène diamine ou de leurs sels tels que l'adipate d'hexaméthylènediamine, pouvant éventuellement comprendre diverses proportions d'autres monomères de polyamide. On peut citer à cet effet le polyamide 66/6T.

Des polyamides selon l'invention peuvent aussi être obtenus par mélange, notamment en fondu. On peut par exemple mélanger un polyamide avec un autre polyamide, ou un polyamide avec un oligomère de polyamide, ou encore un polyamide avec des monomères modifiant la longueur des chaînes, tel que notamment des diamines, diacides carboxyliques, monoamines et/ou monoacides carboxyliques. On peut notamment ajouter au polyamide de l'acide isophtalique, de l'acide téréphtalique ou de l'acide benzoïque, par exemple à des teneurs d'environ 0,2 à 2 % en poids.

La composition de l'invention peut également comprendre les copolyamides dérivés notamment des polyamides ci-dessus, ou les mélanges de ces polyamides ou (co)polyamides.

On peut également utiliser des polyamides branchés notamment obtenus par mélange en polymérisation, en présence des monomères de polyamide, d'au moins un composé multifonctionnel comprenant au moins 3 fonctions réactives, identiques ou non, de type fonction amine ou fonction acide carboxylique.

On peut également utiliser comme polyamide de haute fluidité un polyamide étoile comprenant des chaînes macromoléculaires étoiles et le cas échéant des chaînes macromoléculaires linéaires. Les polymères comprenant de telles chaînes macromoléculaires étoiles sont par exemple décrits dans les documents WO97/24388 et WO99/64496.

Ces polyamides étoiles sont notamment obtenus par mélange en polymérisation, en présence des monomères de polyamide, un aminoacide ou lactame tel que le caprolactame, d'au moins un composé multifonctionnel comprenant au moins 3 fonctions réactives identiques de type fonction amine ou fonction acide carboxylique. Par acide carboxylique, on entend les acides carboxyliques et leurs dérivés, tels que les anhydrides d'acide, les chlorures d'acide et les esters, par exemple. Par amine, on entend les amines et leurs dérivés capables de former une liaison amide.

On peut également utiliser des copolyamides de structure du type arbre statistique qui sont notamment décrits dans la demande WO99/03909.

La composition selon l'invention comprend préférentiellement au moins un polyamide semi cristallin, aliphatique ou semi aromatique, ayant une température de fusion (Tf) telle que 170°C ≤ Tf ≤ 300°C, préférablement 210°C ≤ Tf ≤ 285°C, qui peut être un homopolymère, un copolymère, un polyamide linaire ou branché, ou étoile, ou un mélange de polyamides.

La composition peut comprendre, outre le polyamide modifié de l'invention, un ou plusieurs autres polymères, de préférence polyamides ou copolyamides.

La composition selon l'invention peut comprendre entre 20 et 90 % en poids, préférentiellement entre 20 et 80 % en poids de polyamide, par rapport au poids total de la composition.

La composition peut également comprendre, selon la propriété finale souhaitée, un mélange de polyamide modifié selon l'invention et un ou plusieurs autres polymères, tel que par exemple du polyamide, du polyester, des polyoléfines, du polystyrène, de la résine ABS, du polycarbonate, du sulfure de polyphénylène (PPS), de éther de polyphénylène (PPE), du polyacétal, du polysulfone, de la polyéthersulfone, du polyétherimide, de la polyéthercétone, une résine d'acide polylactique, une résine de polysulfone, une résine élastomère ou des mélanges de ceux-ci.

La composition peut comprendre des charges de renfort ou de remplissages, tels que par exemple des charges fibreuses et/ou des charges non fibreuses.

Comme charges fibreuses on peut citer les fibres de verre, les fibres de carbone, les fibres naturelles, les fibres d'aramides, et les nanotubes, notamment de carbone. On peut citer comme fibres naturelles le chanvre et le lin. Parmi les charges non fibreuses on peut notamment citer toutes les charges particulaires, lamellaires et/ou les nanocharges exfoliables ou non exfoliables comme l'alumine, le noir de carbone, les argiles alumino-silicates, les montmorillonites, le phosphate de zirconium, le kaolin, le carbonate de calcium, les diatomées, le graphite, le mica, le dioxyde de titane, les zéolites, le talc, la wollastonite, les charges polymériques telles que, par exemple, des particules de diméthacrylates, les billes de verre ou de la poudre de verre.

Il est parfaitement possible selon l'invention que la composition comprenne plusieurs types de charges de renfort. De façon préférentielle, la charge la plus utilisée peut être les fibres de verres, du type dit coupé (chopped), notamment ayant un diamètre compris entre 7 et 14 µm. Ces charges peuvent présenter un ensimage surfacique qui assure l'adhésion mécanique entre les fibres et la matrice polyamide.

La concentration pondérale des charges de renfort ou de remplissage peut être entre 1 % et 60 % en poids par rapport au poids total de la composition, de préférence entre 15 et 50 %.

Selon une variante, la composition est dépourvue de charges de renfort et/ou de charges de remplissage.

La composition selon l'invention peut en outre comprendre des additifs classiquement utilisés pour la fabrication de compositions polyamides. Ainsi, on peut citer les lubrifiants, les agents ignifugeants, les plastifiants, les agents nucléants, les agents modificateurs de chocs, les catalyseurs, les stabilisants lumière et/ou thermique, les antioxydants, les antistatiques, les colorants, les matifiants, les additifs d'aide au moulage ou autres additifs conventionnels.

La composition peut comprendre une teneur en agent modificateur de la résistance au choc comprenant des groupements fonctionnels réactifs avec le polyamide supérieure ou égale à 50 % en poids, en particulier supérieure ou égale à 75 % en poids, voire supérieure ou égale à 80 % en poids par rapport au poids total d'agent modificateur de la résistance au choc. Selon un mode de réalisation particulier, la composition comprend une teneur en agent modificateur de chocs comprenant des groupements fonctionnels réactifs avec le polyamide supérieure ou égale à 90 % en poids, notamment supérieure ou égale à 95 % en poids, voire 100 % en poids par rapport au poids total d'agents modificateur de chocs. Avantageusement, 100 % de l'agent modificateur de la résistance aux chocs est un agent modificateur de la résistance au choc comprenant des groupements fonctionnels réactifs avec le polyamide.

La composition peut comprendre une teneur en agent compatibilisant portant des groupements fonctionnels réactifs avec le polyamide supérieure ou égale à 15 % en poids, en particulier supérieure ou égale à 20 % en poids, voire supérieure ou égale à 25 % en poids par rapport au poids total d'agent modificateur de la résistance au choc. Cette variante peut être en particulier réalisée lorsque l'agent modificateur de la résistance au choc est dépourvu de groupements fonctionnels réactifs avec le polyamide.

Lesdits groupements réactifs peuvent permettre d'assurer une bonne dispersion des agents modificateurs de chocs dans la matrice polyamide. On obtient généralement une résistance au chocs en cas de bonne dispersion avec des particules d'agents modificateurs de chocs ayant une taille moyenne comprise entre 0,1 et 1 µm dans la matrice. Ceci peut permettre d'obtenir des compositions présentant des caractéristiques avantageuse, notamment en termes de compromis de propriétés mécaniques, rhéologiques et de propriétés barrières.

Parmi les groupements réactifs on peut citer les groupements anhydrides maléiques, glycidyles, les acides, les esters, notamment les esters (méth)acryliques et les polymères de ceux-ci, et les mélanges de ces groupements.

Les agents modifiants la résistance aux chocs selon l'invention peuvent être des polymères d'élastomères qui peuvent être utilisés à cet effet. Les agents modificateurs de la résilience sont généralement définis comme ayant un module de traction ASTM D-638 inférieur à environ 500 MPa. Des exemples d'élastomères convenables sont les éthylène-ester acrylique-anhydride maléïque, les éthylène-propylène-anhydride maléïque, les EPDM (ethylène-propylène-diène momonère) avec éventuellement un anhydride maléïque greffé, et les ionomères.

La composition comprend préférentiellement de 10 à 35 % en poids, notamment de 10 à 30 % en poids, plus préférentiellement de 20 à 25 % en poids d'agents modifiants la résistance aux chocs, par rapport au poids total de la composition.

On préfère notamment les agents modificateurs de chocs comprenant des groupements fonctionnels réactifs avec le polyamide. On peut par exemple citer les terpolymères d'éthylène, ester acrylique et glycidyl méthacrylate, les copolymères d'éthylène et de butyl ester acrylate, les copolymères d'éthylène, n-butyl acrylate et glycidyl méthacrylate, les copolymères d'éthylène et d'anhydride maléique, les copolymères styrène-maléïmides greffés avec de l'anhydride maléique, les copolymères styrène-éthylène-butylène-styrène modifié avec de l'anhydride maléique, les copolymère styrène-acrylonitrile greffés anhydrides maléiques, les copolymères acrylonitrile butadiène styrène greffés anhydrides maléiques, et leurs versions hydrogénées.

Ces charges et additifs peuvent être ajoutés au polyamide modifié par des moyens usuels adaptés à chaque charge ou additif, tel que par exemple lors de la polymérisation ou en mélange en fondu.

La composition polyamide comprend une résine novolaque. Les résines novolaques sont généralement des produits de condensation de composés phénoliques avec des aldéhydes ou cétones. Ces réactions de condensation sont généralement catalysées par un acide ou une base.

On entend généralement par résine novolaque, une résine phénolique dont le rapport formaldéhyde/phénol est inférieur à 1 et qui, de ce fait, reste normalement thermoplastique jusqu'à ce qu'elle soit chauffée avec une quantité appropriée d'un composé, par exemple formaldéhyde ou hexaméthylènetétramine, susceptible de donner des liaisons supplémentaires, par conséquent de donner un produit infusible.

Le polyamide selon l'invention peut comprendre une ou plusieurs types de résine novolaque différentes.

Les résines novolaques présentent généralement un degré de condensation compris entre 2 et 15.

Les composés phénoliques peuvent être choisis seuls ou en mélange parmi le phénol, le crésol, le xylénol, le naphtol, les alkylphénols, comme le butyl-phénol, le terbutyl-phénol, l'isooctyl-phénol, le nitrophénol, le phénylphénol, le résorcinol ou le biphénol A ; ou tout autre phénol substitué.

L'aldéhyde le plus fréquemment utilisé est le formaldéhyde. On peut toutefois en utiliser d'autres, tels que l'acétaldéhyde, le para-formaldéhyde, le butyraldéhyde, le crotonaldéhyde, le glyoxal, et le furfural. Comme cétone, on peut utiliser l'acétone, la méthyle éthyle cétone ou l'acétophénone. L'aldéhyde et/ou la cétone peuvent éventuellement porter un autre groupement fonctionnel, tel que par exemple une fonction acide carboxylique. On peut notamment citer à cet effet l'acide glyoxylique ou l'acide lévulinique.

Selon un mode de réalisation particulier de l'invention, la résine novolaque est un produit de condensation du phénol et du formaldéhyde.

Les résines novolaques utilisées ont avantageusement un poids moléculaire compris entre 500 et 3000 g/mol, de préférence entre 800 et 2000 g/mol.

Comme résine novolaque commerciale, on peut citer notamment les produits commerciaux Durez®, Vulkadur® ou Rhenosin®.

En particulier, lorsque la composition comprend une teneur en agent modificateur de la résistance aux chocs, en particulier de type polyoléfine, supérieure égal à 25 % en poids par rapport au poids total de la composition, il peut être utile qu'elle comprenne également de la novolaque, notamment en une teneur allant de 1 à 7 % en poids, en particulier de 4 à 6 % en poids, voire d'environ 5 % en poids par rapport au poids total de la composition.

Le ratio pondéral entre l'agent modificateur d'impact, en particulier de type polyoléfineet la novolaque peut aller de 4 à 10, en particulier de 5 à 9, voire être d'environ 6.

La présence de novolaque permet d'obtenir un compromis de propriétés mécaniques particulièrement intéressant.

Les matériaux et compositions de l'invention sont généralement obtenus par mélange des différents constituants à chaud, par exemple dans une extrudeuse mono ou bivis, à une température suffisante pour maintenir la résine polyamide en milieu fondu ; ou à froid dans un mélangeur mécanique notamment. Généralement, le mélange obtenu est extrudé sous forme de joncs qui sont coupés en morceaux pour former des granulés. Les composés peuvent être ajoutés à n'importe quel moment du processus de fabrication du matériau plastique, notamment par mélange à chaud ou à froid avec la matrice plastique. L'addition des composés et des additifs peut être réalisée par ajout de ces composés dans la matrice plastique fondue sous forme pure ou sous forme de mélange concentré dans une matrice telle que par exemple une matrice plastique.

Selon le procédé de l'invention, l'étape a) consiste à la fabrication d'un ou plusieurs composants par moulage par injection de la composition polyamide selon l'invention. Ces composants sont réalisés par tout procédés classiques de moulage par injection biens connus du domaine. Les composants peuvent être notamment des demi-coquilles ou des articles de géométries plus complexes qui une fois assemblés permettront de fabriquer le réservoir. Les composants peuvent être des pièces concaves ou convexes par exemple.

A l'étape b) du procédé de l'invention, le ou les composants fabriqués à l'étape a) sont assemblés, éventuellement avec un ou plusieurs autres composants, pour la fabrication du réservoir. Les autres composants peuvent être des pièces métalliques ou plastiques ou autres, comme par exemple des inserts. Ces autres composants peuvent être obtenu par divers types de procédé, notamment par moulage par injection pour des composants plastiques.

Le réservoir peut être constitué uniquement de composants obtenus à l'étape a).

Par assemblage de composants, on entend la mise en contact des composants sur au moins une partie de leurs surfaces respectives, et solidarisés au niveau de la surface de contact. Les composants peuvent être mis en contact sur des portions planes de leurs surfaces, ou sur des portions courbes. Les parties des composants mis en contact peuvent être de formes conjuguées.

Cet assemblage peut être effectué de manière direct ou indirect. On cite comme assemblage direct le soudage, l'emboitage, le frettage et l'insertion notamment. On cite comme assemblage indirect le collage, l'agrafage, l'utilisation de visserie ou l'embrèvement. Cet assemblage peut être permanent ou bien démontable sans détérioration importante des pièces ou composants, comme par exemple par l'utilisation de vis, rivets, clous, brasures, agrafes ou autres.

On préfère notamment le soudage direct ou indirect des composants. De préférence, les surfaces mises en contact coopèrent pour former une ligne de soudure continue, ou une surface de soudure continue. Après mise en contact, les surfaces sont par exemple amenées à une température au moins supérieure à la température de ramollissement des matériaux constituant les éléments, de préférence voisine à la température de fusion. Comme techniques de soudure connues et convenables pour l'invention, on peut citer à titre d'exemple : la soudure par ultrasons selon laquelle les surfaces sont portées à la température voulue par les ultrasons, la soudure par vibration selon laquelle les surfaces sont mises en contact et en vibration l'une par rapport à l'autre, le frottement entre les surfaces provoquant ainsi l'échauffement et le ramollissement de la matière, la soudure par miroir chauffant utilisant un miroir chauffé est disposé entre les surfaces de soudure, puis retiré quand celles-ci ont atteint la température désirée, les surfaces sont alors mises en contact sous une pression déterminée, la soudure par infrarouge qui est une technique semblable à celle du miroir chauffant, la source de chaleur étant un émetteur de rayons infrarouges, la soudure par air chaud et la soudure laser.

L'assemblage à l'étape b) est préférentiellement réalisé par mise en contact des composants sur au moins une partie de leurs surfaces puis soudure des composants sur au moins une partie où les composants sont en contact, à une température supérieure aux température de ramollissement des matériaux constituant les composants.

Ainsi, le procédé peut comprendre une étape de formation de la coque du réservoir, en particulier représentant au moins 90 % de la surface du réservoir final, en particulier en deux hémi-coques, l'ajout de modules et/ou dispositifs à l'intérieur dans une ou les deux hémi-coques et assemblage des deux hémi-coques, notamment par soudure. Ce procédé peut ainsi permettre d'éviter une étape de découpe de la coque pour permettre des assemblages, ainsi que cela est généralement fait dans le cas du soufflage ou blow-moulding.

La présente invention concerne aussi un réservoir comprenant un assemblage de composants dont au moins un des composants est obtenu par moulage par injection de la composition polyamide selon l'invention.

Les articles obtenus définis comme réservoirs peuvent notamment être des conteneurs, des cuves, des caissons, des récipients ouverts ou fermés ou dérivés.

Un langage spécifique est utilisé dans la description de manière à faciliter la compréhension du principe de l'invention. Il doit néanmoins être compris qu'aucune limitation de la portée de l'invention n'est envisagée par l'utilisation de ce langage spécifique. Des modifications, améliorations et perfectionnements peuvent notamment être envisagés par une personne au fait du domaine technique concerné sur la base de ses propres connaissances générales.

Le terme et/ou inclut les significations et, ou, ainsi que toutes les autres combinaisons possibles des éléments connectés à ce terme.

D'autres détails ou avantages de l'invention apparaîtront plus clairement au vu des exemples donnés ci-dessous uniquement à titre indicatif.

### PARTIE EXPERIMENTALE

Les composés utilisés sont les suivants :
- Polyamide 66 de type linaire ayant un IV de 150 ml/g (déterminé dans l'acide formique à 90% selon la norme ISO 307) et une température de fusion (Tf) de 265°C.
- Polyamide 66 de type linaire ayant un IV de 175 ml/g (déterminé dans l'acide formique à 90% selon la norme ISO 307) et une température de fusion (Tf) de 265°C.
- Polyamide 66 de type linaire ayant un IV de 310 ml/g (déterminé dans l'acide formique à 90% selon la norme ISO 307) obtenu par le procédé PCS et une température de fusion (Tf) de 265°C.
- Polyamide 66 de type branché obtenu selon la demande WO2010142605 en utilisant 0,38 % molaire de BHT (Bis-HexaméthylèneTriamine) et 99,62 % molaire de sel N (sel 1:1 d'hexaméthylène diamine et d'acide adipique). Le polyamide présente un index de viscosité de 150 ml/g (déterminé dans l'acide formique selon la méthode PN-EN ISO 307) et une température de fusion (Tf) de 262°C.
- Copolyamide PA66.6 (90/10 % massique) ayant un IV de 165 ml/g (déterminé dans l'acide formique à 90% selon la norme ISO 307) et une température de fusion (Tf) de 240°C.
- Polyamide 6 de type arbre statistique obtenu selon la demande WO99/03909 en utilisant 0,185 % molaire d'acide amino-5 isophtalique et 99,8 % molaire d'ε-caprolactame. Le polyamide présente un index de viscosité 200 à 225 ml/g (déterminé dans l'acide formique selon la méthode PN-EN ISO 307) et une température de fusion (Tf) de 217°C.
- Polyamide 610 linaire obtenu en utilisant le sel 1:1 molaire d'hexaméthylène diamine et d'acide sébacique. Le polyamide présente un index de viscosité de 135 ml/g (déterminé dans l'acide formique selon la méthode PN-EN ISO 307) et une température de fusion (Tf) de 215°C.
- Copolyamide 66/6T de ratio molaire 65/35 ayant une température de fusion égale à 283°C, synthétisé à partir de 35% molaire de sel 6T (sel 1:1 d'héxaméthylène diamine et d'acide téréphtalique) et 65% molaire de sel N (sel 1:1 d'hexaméthylène diamine et d'acide adipique) et d'acide acétique ajouté comme limiteur de chaîne (71 meq/kg dans le polymère final) selon un procédé de synthèse analogue à celui d'un PA 66 mais avec une température de finition de 290°C. Les concentrations en groupements terminaux amine GTA et acide carboxylique GTC sont déterminé par dosage potentiométrique. GTA=85 meq/kg, GTC=52 meq/kg. La masse molaire moyenne en nombre, déterminée à partir de l'expression Mn=2000000 / (concentration en groupements terminaux) est de 9600 g/mol.
- Modificateurs de choc: Exxelor VA1801, Exxelor VA1803 et Bondyram 7103 (copolymères oléfinique greffé anhydride maléique).
- Extenseur de chaine : Araldite GT7071
- Résine phénolique type Novolak S
- Additifs : cire EBS, masterbatch de 50% carbon black dans polyethylene et masterbatch de 40% nigrosine dans PA6 ainsi que des stabilisants thermiques sous forme de mélanges maitre.

La température de fusion des polyamides est déterminée par calorimétrie différentielle à balayage - DSC « Differential Scanning Calorimetry » à l'aide d'un appareil Perkin Elmer Pyris 1, à une vitesse de 10°C/min.

Avant extrusion, les polyamides sont séchés à une teneur en eau inférieure à leur teneur en eau à l'équilibre. Des formulations sont réalisées par mélange des différents composants et additifs en voie fondu dans une extrudeuse bi-vis co-rotative WERNER&PLEIFEDER ZSK 40 avec dégazage (L/D=36), fonctionnant à 30 - 40 kg/h et à une vitesse de 270 trs/min. Les températures d'extrusion avec un profil croissant sont de 250-280°C. Le couple moteur et la puissance de moteur absorbée varient selon les polyamides. Tous les composants de la formulation sont introduits au début de l'extrudeuse.

Les compositions des formulations sont regroupées dans les tableaux 1 et 2. Les % sont exprimés en poids, par rapport au poids total de la composition. Les formulations comprennent 4 % d'un mélange de colorants, de stabilisants et de lubrifiants.

Les propriétés mécaniques, la perméabilité au carburant SP95 E10 et des viscosités à l'état fondu de ces formulations sont regroupées dans les tableaux.

Les propriétés résistance au choc (Choc Charpy entaillé) ont été déterminées selon la norme ISO 179-1/1eA avec des éprouvettes injectées dites de multifonctions d'épaisseur 4 mm.

Les viscosités à l'état fondu sont mesurées selon la norme ISO11443 à l'aide d'un rhéomètre capillaire Göttfert 2002. La mesure est effectuée sur des échantillons ayant un taux d'humidité à l'équilibre. Un piston se déplaçant à vitesses programmées pousse le polymère fondu à travers un capillaire de longueur L (30 mm) et de diamètre D (1 mm). Le débit correspondant est mesuré duquel on peut déduire la viscosité apparente. Un balayage en gradient de cisaillement est effectué de 5000 s⁻¹ à 25 s⁻¹. On réalise ainsi un profil rhéologique qui permet de définir le comportement du matériau sur toute une gamme de gradient de cisaillement représentatif du procédé injection. La viscosité est mesurée à un gradient de cisaillement de 1000 s⁻¹ et une température égale à la température de fusion du polyamide + 35°C.

L'analyse de la perméabilité aux essences est effectué selon une procédure suivante: des plaques de dimension 100x100x0,8 mm sont obtenues par moulage par injection d'une composition polyamide sur une machine DEMAG 80 t de diamètre de vis 25 mm ; par exemple, pour du PA66: Tbarrel=275°C, Tmoule=80°C, temps de cycle 25 s. Les plaques sont séchées à 80°C sous vide pendant une nuit. Une des faces de la plaque est ensuite placée en contact avec de l'essence SP95 E10, comprenant 10% en volume d'éthanol, 45% d'iso-octane et 45% de toluène, à l'aide d'une coupelle de perméation en aluminium de volume 25 cm³ remplie d'essence à 75%, l'ensemble coupelle-plaque étant scellé de façon étanche. Les coupelles sont ensuite placées dans une étuve à 40°C avec une humidité relative de 20 %. La masse de l'ensemble (coupelle+plaque+essence) est mesurée au cours du temps. Pendant une première période dite période d'induction, on ne détecte aucune perte de masse et cela permet de vérifier l'étanchéité du système. La perte de masse détectée est multipliée par l'épaisseur de la plaque de polymère qui est de 0,8 mm dans la configuration de test choisie et divisée par la surface d'échange polymère / vapeurs essence définie par le design de la coupelle de perméation. Un disque de surface 0,001256 m² dans la configuration de test choisie. En dérivant par rapport au temps cette perte de masse normalisée on obtient une valeur de perméabilité instantanée exprimée en g.mm/m².J. La perméabilité instantanée est nulle pendant la période d'induction, puis elle augmente progressivement jusqu'à une valeur à l'équilibre qui correspond à la valeur de perméabilité en régime permanent. Cette valeur de perméabilité en régime permanent est considérée comme étant la perméabilité du matériau. Les valeurs de perméabilité données plus loin sont des valeurs moyennes obtenues à partir de trois essais au minimum.

**Tableau 1**

| **EXAMPLES** | **C1** | **C2** | **1** | **2** | **3** | **4** |
|---|---|---|---|---|---|---|
| PA 66 linaire (IV=150 mL/g) | | | 65,5 | | | |
| PA 66 linaire (IV=175 mL/g) | 96 | | | 71 | | |
| PA66 linaire (IV=320 mL/g) | | | | | 71 | |
| PA610 (IV=135 mL/g) | | 96 | | | | |
| PA66.6T | | | | | | 71 |
| Elastomère Exxelor VA1801 | | | 25 | 25 | 25 | 25 |
| Resine phénolique type Novolac S | | | 5 | | | |
| Araldite GT7071 | | | 0,5 | | | |
| Perméabilité E10 (g.mm/m².Jour) | 1,3 | 7,3 | 1,7 | 3,7 | 3,6 | 1,0 |
| Viscosité (Pa.s) | 150 | 145 | 270 | 300 | 280 | 270 |
| Impact Charpy entaillé à 23°C (KJ/m²) - ISO 179-1/1eA | 5 | 6 | 103 | 99 | 89 | 97 |
| Impact Charpy entaillé à -40°C (KJ/m²) - ISO 179-1/1eA | 4 | 4 | 24 | 28 | 34 | 28 |

**Tableau 2**

| **EXAMPLES** | **5** | **6** | **7** | **8** | **9** | **10** |
|---|---|---|---|---|---|---|
| PA 66 branché (IV=150 mL/g) | 71 | | | | | |
| PA66.6 (IV= 165 mL/g) | | 66 | | | | |
| PA6 arbre (IV=210 mL/g) | | | 61 | 80 | 75 | 66 |
| Elastomère Exxelor VA1801 | 25 | 25 | | | | |
| Elastomère Exxelor VA1803 | | | 30 | | | |
| Elastomère Bondyram 7103 | | | | 15 | 20 | 25 |
| Résine phénolique type Novolac S | | 5 | 5 | | | 5 |
| Araldite GT7071 | | | | 1 | 1 | |
| Perméabilité E10 (g.mm/m².Jour) | 3,6 | 3,2 | 4,4 | 3,9 | 5,4 | 4,6 |
| Viscosité (Pa.s) | 390 | 340 | 360 | 270 | 350 | 410 |
| Impact Charpy entaillé à 23°C (KJ/m²) - ISO 179-1/1eA | 93 | 102 | 119 | 82 | 108 | 109 |
| Impact Charpy entaillé à -40°C (KJ/m²) - ISO 179-1/1eA | 23 | 24 | 111 | 17 | 29 | 31 |

Il apparait ainsi que l'utilisation d'une composition selon la présente invention permet la fabrication d'un réservoir aux carburants présentant un excellent compromis de propriétés mécaniques, rhéologiques et de propriétés barrières.

## Revendications

1. Procédé de fabrication d'un réservoir à propriétés barrières élevées aux fluides, comprenant au moins les étapes suivantes :
a) fabrication d'un ou plusieurs composants par moulage par injection d'une composition polyamide ; et
b) assemblage du ou des composants obtenus à l'étape a), éventuellement avec un ou plusieurs autres composants, pour obtenir le réservoir ;
ladite composition polyamide comprenant de 5 à 40 % en poids d'agent modificateur de la résistance aux chocs et présentant les caractéristiques suivantes :
- une viscosité à l'état fondu comprise entre 50 et 700 Pa.s, mesurée selon la norme ISO11443 à un gradient de cisaillement de 1000s⁻¹ et température égale à la température de fusion du polyamide + 35°C ; et
- une perméabilité à l'essence SP95 E10 inférieure ou égale à 10 g.mm/m².jour, mesurée à une température de 40°C et une humidité relative de 20 %,
ladite composition comprenant :
- au moins 20 % en poids par rapport au poids total d'agent modificateur de la résistance au choc, d'un agent modificateur de la résistance au choc comprenant des groupements fonctionnels réactifs avec le polyamide, et/ou
- au moins 10 % en poids par rapport au poids total d'agent modificateur de la résistance au choc, d'un agent compatibilisant comprenant des groupements fonctionnels réactifs avec le polyamide, et
ladite composition polyamide étant dépourvue de cyclodextrine et de silice, et comprenant une résine novolaque.

2. Procédé selon la revendication 1 **caractérisé en ce que** la composition présente une viscosité à l'état fondu comprise entre 100 et 500 Pa.s.

3. Procédé selon la revendication 1 ou 2, **caractérisé en ce que** la composition présente une perméabilité à l'essence SP95 E10 inférieure ou égale à 4 g.mm/m².jour.

4. Procédé selon l'une quelconque des revendications 1 à 3, **caractérisé en ce que** le polyamide est un polyamide semi-cristallin aliphatique ou semi-aromatique.

5. Procédé selon l'une quelconque des revendications 1 à 4, **caractérisé en ce que** la composition comprend entre 20 et 90 % en poids de polyamide, par rapport au poids total de la composition.

6. Procédé selon l'une quelconque des revendications 1 à 5, **caractérisé en ce que** les autres composants utilisés à l'étape b) sont des pièces métalliques ou plastiques.

7. Procédé selon l'une quelconque des revendications 1 à 6, **caractérisé en ce que** l'assemblage à l'étape b) est effectué par soudage direct ou indirect.

8. Procédé selon l'une quelconque des revendications 1 à 7, **caractérisé en ce que** le réservoir est constitué uniquement de composants obtenus à l'étape a).

9. Procédé selon l'une quelconque des revendications 1 à 8, **caractérisé en ce que** l'assemblage à l'étape b) est réalisé par mise en contact des composants sur au moins une partie de leurs surfaces puis soudure des composants sur au moins une partie où les composants sont en contact, à une température supérieure aux température de ramollissement des matériaux constituant les composants.

10. Procédé selon l'une quelconque des revendications 1 à 9, **caractérisé en ce qu'**il conduit à un réservoir dont la paroi présente un impact Charpy entaillé à - 40°C (KJ/m²), mesuré selon la norme ISO 179-1/1eA, supérieur ou égal à 23 kJ/m².

11. Procédé selon l'une quelconque des revendications 1 à 10, **caractérisé en ce que** le réservoir présente une épaisseur de paroi faible inférieure à 4 mm.

12. Procédé selon l'une quelconque des revendications 1 à 11, **caractérisé en ce que** les parois répondent au test Essai choc tel que défini par la Directive 2000 8 CE pour une épaisseur de 3 mm.

13. Procédé selon l'une quelconque des revendications 1 à 12, **caractérisé en ce que** les groupements réactifs des agents compatibilisants ou des agents modificateur de la résistance au choc sont choisis parmi les groupements anhydrides maléiques, glycidyles, les esters (méth)acryliques, des polymères de ceux-ci, et leurs mélanges.

14. Procédé selon l'une quelconque des revendications 1 à 13, **caractérisé en ce que** la composition comprend une teneur en modificateur d'impact supérieure égal à 25 % en poids par rapport au poids total de la composition et de la novolaque en une teneur allant de 1 à 7 % en poids par rapport au poids total de la composition.

15. Réservoir à propriétés barrières élevées aux fluides comprenant un assemblage de composants dont au moins un des composants est obtenu par moulage par injection de la composition polyamide telle que décrite selon l'une quelconque des revendications 1 à 14.

## Patentansprüche

1. Verfahren zur Herstellung eines Tanks mit hohen Flüssigkeitsbarriereeigenschaften, umfassend mindestens die folgenden Schritte:
a) Herstellen eines oder mehrerer Bestandteile durch Spritzgießen einer Polyamidzusammensetzung; und
b) Zusammenbauen des oder der Bestandteile, die in Schritt a) erhalten werden, gegebenenfalls mit einem oder mehreren anderen Bestandteilen, um den Tank zu erhalten;
wobei die Polyamidzusammensetzung von 5 bis 40 Gew.-% eines Schlagmodifizierungsmittels umfasst und die folgenden Eigenschaften aufweist:
- eine Schmelzviskosität, die zwischen 50 und 700 Pa·s beträgt, die nach der Norm ISO11443 bei einem Schergradienten von 1000 s⁻¹ und einer Temperatur von +35 °C, die der Schmelztemperatur des Polyamids gleich ist, gemessen ist; und
- eine Permeabilität für den SP95 E10 Kraftstoff von höchstens 10 g·mm/m²/Tag, gemessen bei einer Temperatur von 40 °C und einer relativen Luftfeuchtigkeit von 20 %,
wobei die Zusammensetzung Folgendes umfasst:
- mindestens 20 Gew.-%, bezogen auf das Gesamtgewicht des Schlagmodifizierungsmittels, eines Schlagmodifizierungsmittels, umfassend funktionelle Gruppen, die mit dem Polyamid reaktiv sind, und/oder
- mindestens 10 Gew.-%, bezogen auf das Gesamtgewicht des Schlagmodifizierungsmittels, eines Kompatibilisierungsmittels, umfassend funktionelle Gruppen, die mit dem Polyamid reaktiv sind, und
wobei die Polyamidzusammensetzung frei von Cyclodextrin und Siliciumdioxid ist und ein Novolak-Harz umfasst.

2. Verfahren nach Anspruch 1, **dadurch gekennzeichnet, dass** die Zusammensetzung eine Schmelzviskosität aufweist, die zwischen 100 und 500 Pa·s beträgt.

3. Verfahren nach Anspruch 1 oder 2, **dadurch gekennzeichnet, dass** die Zusammensetzung eine Permeabilität für den SP95 E10 Kraftstoff von höchstens 4 g·mm/m²/Tag aufweist.

4. Verfahren nach einem der Ansprüche 1 bis 3, **dadurch gekennzeichnet, dass** das Polyamid ein semi-kristallines, aliphatisches oder semi-aromatisches Polyamid ist.

5. Verfahren nach einem der Ansprüche 1 bis 4, **dadurch gekennzeichnet, dass** die Zusammensetzung zwischen 20 und 90 Gew.-% Polyamid, bezogen auf das Gesamtgewicht der Zusammensetzung, umfasst.

6. Verfahren nach einem der Ansprüche 1 bis 5, **dadurch gekennzeichnet, dass** die anderen Bestandteile, die in dem Schritt b) verwendet werden, Metall- oder Kunststoffteile sind.

7. Verfahren nach einem der Ansprüche 1 bis 6, **dadurch gekennzeichnet, dass** das Zusammenbauen in dem Schritt b) durch direktes oder indirektes Schweißen durchgeführt wird.

8. Verfahren nach einem der Ansprüche 1 bis 7, **dadurch gekennzeichnet, dass** der Tank ausschließlich aus Bestandteilen gebildet ist, die in Schritt a) erhalten werden.

9. Verfahren nach einem der Ansprüche 1 bis 8, **dadurch gekennzeichnet, dass** das Zusammenbauen in dem Schritt b) durch Inkontaktbringen der Bestandteile auf mindestens einem Abschnitt ihrer Flächen und dann durch Schweißen der Bestandteile auf mindestens einem Abschnitt, in dem die Bestandteile in Kontakt sind, bei einer Temperatur, die höher als die Erweichungstemperatur der Materialien ist, die die Bestandteile bilden, durchgeführt wird.

10. Verfahren nach einem der Ansprüche 1 bis 9, **dadurch gekennzeichnet, dass** es zu einem Tank führt, dessen Wand eine Charpy-Kerbschlagzähigkeit bei -40 °C (kJ/m²), gemessen nach ISO 179/1eA, aufweist, die größer oder gleich 23 kJ/m² ist.

11. Verfahren nach einem der Ansprüche 1 bis 10, **dadurch gekennzeichnet, dass** der Tank eine geringe Wanddicke von weniger als 4 mm aufweist.

12. Verfahren nach einem der Ansprüche 1 bis 11, **dadurch gekennzeichnet, dass** die Wände den Test der Schlagprüfung, wie von der Richtlinie 2000/8/EG festgelegt, für eine Dicke von 3 mm erfüllen.

13. Verfahren nach einem der Ansprüche 1 bis 12, **dadurch gekennzeichnet, dass** die reaktiven Gruppen der Kompatibilisierungsmittel oder der Schlagmodifizierungsmittel aus Maleinsäureanhydridgruppen, Glycidylgruppen, den (Meth)Acrylsäureestern, Polymeren davon und Mischungen davon ausgewählt werden.

14. Verfahren nach einem der Ansprüche 1 bis 13, **dadurch gekennzeichnet, dass** die Zusammensetzung einen Gehalt an Schlagmodifizierungsmittel von mindestens 25 Gew.-%, bezogen auf das Gesamtgewicht der Zusammensetzung, und Novolak mit einem Gehalt von 1 bis 7 Gew.-%, bezogen auf das Gesamtgewicht der Zusammensetzung, umfasst.

15. Tank mit hohen Flüssigkeitsbarriereeigenschaften, umfassend eine Anordnung von Bestandteilen, wobei mindestens einer der Bestandteile durch Spritzgießen einer Polyamidzusammensetzung, wie in einem der Ansprüche 1 bis 14 beschrieben, erhalten ist.

## Claims

1. Process for the manufacture of a tank having high barrier properties toward fluids, comprising at least the following stages:
a) manufacture of one or more components by injection molding a polyamide composition; and
b) assembling the component or components obtained in stage a), optionally with one or more other components, in order to obtain the tank;
said polyamide composition comprising from 5% to 40% by weight of agent which modifies the impact strength and exhibiting the following characteristics:
- a melt viscosity of between 50 and 700 Pa.s, measured according to the standard ISO 11443, at a shear gradient of 1000 s⁻¹ and a temperature equal to the melting point of the polyamide + 35°C; and
- a permeability to gasoline SP95 E10 of less than or equal to 10 g.mm/m².day, measured at a temperature of 40°C and a relative humidity of 20%,
said composition comprising:
- at least 20% by weight, with respect to the total weight of agent which modifies the impact strength, of an agent which modifies the impact strength comprising functional groups which react with the polyamide, and/or
- at least 10% by weight, with respect to the total weight of agent which modifies the impact strength, of a compatibilizing agent comprising functional groups which react with the polyamide, and
said polyamide composition being devoid of cyclodextrin and silica, and comprising a novolac resin.

2. Process according to Claim 1, **characterized in that** the composition exhibits a melt viscosity of between 100 and 500 Pa.s.

3. Process according to Claim 1 or 2, **characterized in that** the composition exhibits a permeability to gasoline SP95 E10 of less than or equal to 4 g.mm/m².day.

4. Process according to any one of Claims 1 to 3, **characterized in that** the polyamide is a semicrystalline aliphatic or semiaromatic polyamide.

5. Process according to any one of Claims 1 to 4, **characterized in that** the composition comprises between 20% and 90% by weight of polyamide, with respect to the total weight of the composition.

6. Process according to any one of Claims 1 to 5, **characterized in that** the other components used in stage b) are metal or plastic parts.

7. Process according to any one of Claims 1 to 6, **characterized in that** the assembling in stage b) is carried out by direct or indirect welding.

8. Process according to any one of Claims 1 to 7, **characterized in that** the tank is composed solely of components obtained in stage a).

9. Process according to any one of claims 1 to 8, **characterized in that** the assembling in stage b) is carried out by bringing the components into contact over at least a portion of their surfaces and then welding the components over at least a portion where the components are in contact, at a temperature greater than the softening temperature of the materials forming the components.

10. Process according to any one of Claims 1 to 9, **characterized in that** it results in a tank, the wall of which exhibits a notched Charpy impact at -40°C (kJ/m²), measured according to the standard ISO 179-1/1eA, of greater than or equal to 23 kJ/m².

11. Process according to any one of Claims 1 to 10, **characterized in that** the tank exhibits a low wall thickness of less than 4 mm.

12. Process according to any one of Claims 1 to 11, **characterized in that** the walls meet the impact Trial test as defined by Directive 2000/8/EC for a thickness of 3 mm.

13. Process according to any one of Claims 1 to 12, **characterized in that** the reactive groups of the compatibilizing agents or of the agents which modify the impact strength are chosen from the maleic anhydride or glycidyl groups, (meth)acrylic esters, polymers of these, and their mixtures.

14. Process according to any one of Claims 1 to 13, **characterized in that** the composition comprises a content of impact modifier of greater than or equal to 25% by weight, with respect to the total weight of the composition, and novolac in a content ranging from 1% to 7% by weight, with respect to the total weight of the composition.

15. Tank having high barrier properties toward fluids comprising an assembly of components, at least one of the components of which is obtained by injection molding the polyamide composition as described according to any one of Claims 1 to 14.
